# EUROPEAN PATENT APPLICATION

(11) **EP 4 606 448 A1**
(43) Date of publication of application: **27.08.2025**
(21) Application number: 24386018.6
(22) Date of filing: 22.02.2024
(51) Int. Cl.: A63F 13/87, A63F 13/86, A63F 13/424

(54) **APPARATUS, SYSTEMS AND METHODS FOR VIDEO GAMES**

(71) Applicant: Sony Interactive Entertainment Inc., Tokyo 108-0075 (JP)
(72) Inventor: Eder, Michael, London, W1F 7LP (GB); Michailidis, Lazaros, London, W1F 7LP (GB)
(74) Representative: D Young & Co LLP

(57) **Abstract**

A data processing apparatus comprises receiving circuitry to receive video images and associated speech signals for a video game, the speech signals indicative of speech input for a plurality of users associated with the video game, analysis circuitry to analyse at least some of the video images and generate video description data indicative of one or more properties for the video images, and selection circuitry to select a subset of the speech signals to be output for the video game, wherein the selection circuitry is configured to select a respective speech signal responsive to whether a comparison for the respective speech signal and the video description data satisfies a selection condition.

## Description

### Field of the Disclosure

The present disclosure relates to the field of processing data. In particular, the present disclosure relates to apparatus, systems and methods for processing data for video games.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior against the present disclosure.

Many existing video games include functionality for allowing communications between users. Text-based and voice-based communications generally contribute to providing a more interactive experience between users of video games. Such communications may assist in facilitating enhanced user interaction, relationship building and player coordination as well as other possibilities.

In particular, voice-based communication can allow fast and convenient communication between users in potentially real-time (or near-real time) and has become a popular communication technique in many video games. Microphones provides as part of user devices such as headsets worn by users can detect speech input by users for allowing speech-based interactions for users of video games. Voice-based communication may be provided for facilitating communication between users that play a video game and also potentially in some cases for allowing communication by users that may only spectate.

Higher numbers of participating users (e.g. playing and/or spectating) for video games can potentially present difficulties for voice-based communications. Moreover, when simultaneously outputting voice-based communications for each of a number of users to a respective user the resulting sounds can potentially become incomprehensible, or at least overburdening, for that user. For example, for massively multiplayer online (MMO) video games, simultaneous voice-based communications from a large number of users can potentially result in an unintelligible mixture of sounds thus resulting in users deciding to disable voice-based communications. More generally, provision of voice-based communication for video games can be hindered and may potentially become infeasible for some video games due to users simultaneously speaking over each other.

There is therefore a need to improve voice-based communication for video games. It is in this context that the present disclosure arises.

Various aspects and features of the present disclosure are defined in the appended claims and within the text of the accompanying description. Example embodiments include at least a data processing apparatus, a method, a computer program and a machine-readable, non-transitory storage medium which stores such a computer program.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 is a schematic diagram illustrating an example of an entertainment device;
Figure 2 is a schematic diagram illustrating a data processing apparatus in accordance with embodiments of the disclosure;
Figure 3 is a schematic diagram illustrating an example system;
Figure 4 is a schematic diagram illustrating a data processing apparatus in accordance with some embodiments of the disclosure; and
Figure 5 is a schematic diagram illustrating a method.

### DESCRIPTION OF THE EMBODIMENTS

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

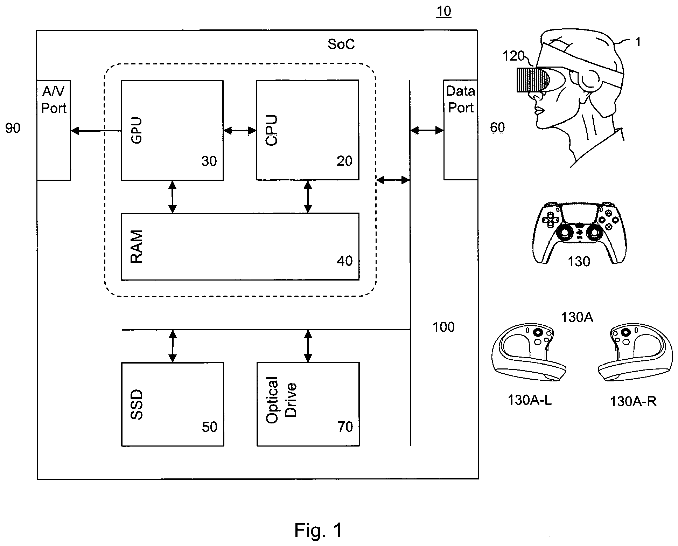

Referring now to the drawings, wherein like reference numerals designate identical or corresponding parts, Figure 1 shows an example of an entertainment device 10 which may be a computer or video game console, for example.

The entertainment device 10 comprises a central processor 20. The central processor 20 may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit 120 worn by a user 1.

The entertainment device also comprises RAM 40, and may have separate RAM for each of the CPU and GPU, and/or may have shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is the head mounted display 'HMD' 120 worn by the user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers 130, 130A and/or one or more VR controllers 130A-L,R in the case of the HMD and/or one or more speech input devices (e.g. microphones). The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

Figure 1 therefore provides an example of a data processing apparatus suitable for executing an application such as a video game and generating video and audio content for the video game which can be output to a user using any suitable display (e.g. the HMD) and audio output device.

Voice-based communication allows fast and efficient communication between users for video games. Voice-based communication techniques can be used for various purposes such as allowing communication between players of a multiplayer video game and/or allowing spectators (i.e. users that do not actively participate in the game) to communicate with players and/or other spectators for multiplayer and single player video games.

In some cases, a number of users associated with a respective session for a video game can result in voice communication functionality becoming over crowded to an extent that simultaneous audio communications from a number of users may result in user overburdening and/or an unintelligible mixture of sounds. In the case of a multiplayer online game (such as a massively multiplayer online game "MMO"), for example, the number of users can in some cases potentially prohibit the use of voice chat functionality. One solution for overcoming this problem is to allow users to select another user from which they wish to receive voice communication. However, this can potentially lead to a frustrating experience in which users have to repeatedly select other users and may potentially result in receiving redundant or superfluous voice communication.

In the following discussion, described embodiments may be implemented in any suitable form including hardware, software, firmware or any combination of these. Described embodiments may be implemented at least partly as computer software running on one or more computer processors (e.g. data processors and/or digital signal processors).

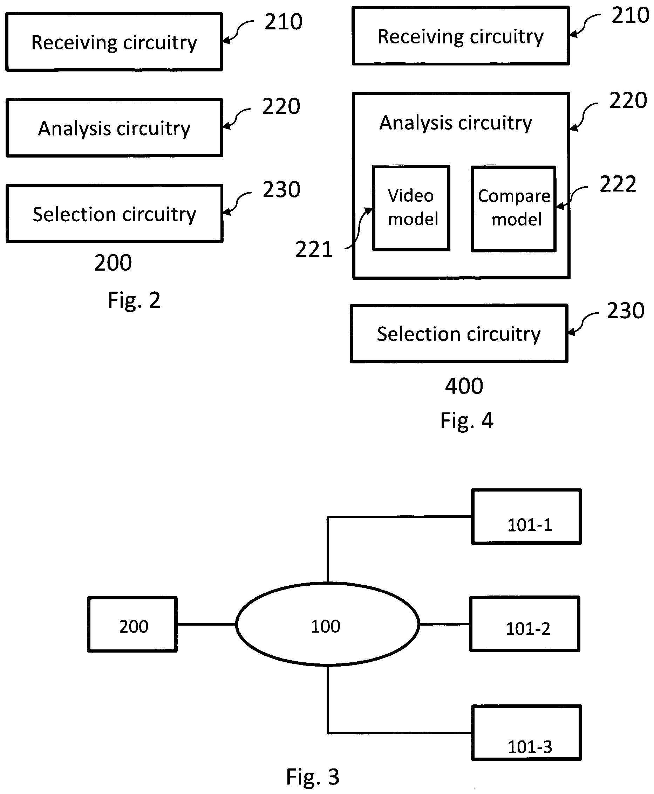

Figure 2 schematically illustrates a data processing apparatus 200 in accordance with embodiments of the disclosure. The data processing apparatus 200 comprises receiving circuitry 210, analysis circuitry 220 and selection circuitry 230. The data processing apparatus 200 may be provided as part of any suitable processing device such as a user device and/or a server device. In some cases, the functionality of the data processing apparatus 200 may be achieved in a distributed manner using a combination of devices. In some examples, the functionality of the data processing apparatus 200 may be provided at one of server side and a client side or any suitable combination thereof. For example, the data processing apparatus 200 may be provided at a client side so as to receive content (at least video images and speech signals for a plurality of users) for a video game and, according to the techniques to be discussed below, one or more speech signals can be selected for output to a user associated with the client device. In other examples, the data processing system 200 may be provided at a server side so as to receive content for a video game and, according to the techniques to be discussed below, one or more speech signals can be selected for output to one or more users via one or more communication networks (e.g. the Internet).

The data processing apparatus 200 is configured to receive content associated with a video game. The video game may be a single player or multiplayer video game and the received content may relate to any of a pre-recorded session for a video game and a live session for a video game. The video game may relate to any of a client-side executed video game and a server-side executed video game or a combination thereof. In some examples, the video game may be an online multiplayer video game executed using one or more server devices. In some examples, the data processing apparatus 200 may optionally comprise video game processing circuitry for executing a session for a video game (e.g. online multiplayer video game) and generating video and audio content for the session. In some examples, a first server device may be responsible for execution of a session of a video game to generate video and audio content for the video game, and the components illustrated in Figure 2 may be provided as part of another associated server device that receives at least some of the generated content.

The data processing apparatus 200 receives at least video images for a video game and also associated speech signals for the video game. The receiving circuitry 210 is configured to receive video images having any suitable frame rate and image resolution. The video images may depict a video game environment from any suitable perspective, such as a first person viewpoint, third person viewpoint or other similar possibilities. For example, in the case of a first person shooter video game, the video images may be generated with a first person viewpoint for a player user or a non-player character (NPC). In the case of a driving video game, the video images may be generated with any suitable perspective with respect to a vehicle.

In the following discussion, the techniques of the present disclosure will be discussed with reference to video images and associated speech signals for a respective session of a video game. However, it will be appreciated that the receiving circuitry may receive such content for more than one video game session (which may be live and/or recorded sessions) relating to a same video game title or different video game titles. In some examples, the data processing apparatus 200 may be provided as part of a dedicated server device that receives content for respective video game sessions (at least video images and associated speech signals for a plurality of users associated with each of the respective video game sessions) and selects a subset of the speech signals to be output for the video images for each of the respective video game sessions.

The speech signals received by the receiving circuitry 210 are indicative of speech input for a plurality of users associated with the video game. For example, in the case of a single player video game, a player user may provide speech input which can be detected by one or more microphones and processed so as to be output together with the video images for the video game to one or more other spectator users. A microphone associated with the player user (e.g. included in a headset worn by the player user and/or another device associated with the player user) may detect speech input by the player user and generate speech signals indicative of the speech input. The single player video game may be executed locally by a user device (e.g. a game console) or executed by a remote server or a combination thereof.

In some examples, in addition to the speech signal for the player user, one or more spectator users may each provide speech signals for commenting on the single player video game being played by the player user. Hence, in the case of a single player video game, the receiving circuitry 210 can be operable to receive the video images for the video game and speech signals for a plurality of users associated with the video game. In some examples, a live streamed single player video game may potentially be viewed by tens, hundreds or even thousands of spectators. For example, Voice over Internet Protocol (VoIP) may be used for communication of speech signals. Live streaming techniques for streaming video games with accompanying audio are generally known and are not discussed in detail.

In the case of a single player game having a respective player user and also a plurality of spectator users (at least some of which provide speech input for the video game), the data processing apparatus 200 may be operable to perform selection of the subset by selecting the subset from a plurality of speech signals each associated with a respective spectator user for the video game. In this way, the video images can be output together with a subset of the speech signals for the spectator users. The selected subset may be output to any of the player user and/or one or more of the spectator users. Therefore, the player user may view images of their gameplay whilst also receiving the subset of speech signals for the spectator users. Similarly, one or more spectator users may view images of the gameplay whilst also receiving the subset of speech signals for the spectator users. Optionally, if the respective player user also provides speech input, then a speech signal associated with the player user may also be output to one or more spectator users in addition to the subset (e.g. the data processing apparatus 200 may be operable to select the player's speech signal by default so as to output the player's speech signal to one or more spectator users).

It will be appreciated that the same techniques are similarly applicable to multiplayer video games having a plurality of player users and optionally having one or more spectator users. For example, in the case of a multiplayer video game, each player user may view their own video images and be capable of providing speech input which can be detected by one or more microphones and processed so as to be output to one or more other users. For example, a given player user may be capable of receiving speech signals from any of the other player users. In some examples, a team-based multiplayer video game may allow a given player to receive speech signals from other player users of a same team as the given player. In some example, player users may also be capable of receiving speech signals from one or more spectator users and/or vice versa. For example, a multiplayer video game may be played by a plurality of player users and viewed by a plurality of spectator users such that both player users and spectator users may be associated with the video game. In some cases, any user associated with the video game may be capable of receiving speech signals from any other user associated with the video game. In some cases, one or more criteria such as a team affiliation may be used for filtering which speech signals can be received by a given user.

More generally, some users associated with a session for a video game may provide speech input and some users may only play or only watch the video game without providing speech input. In the case of selecting speech signals for output to a user that only watches or only plays the video game, the data processing apparatus can be operable to select the subset from an initial set comprising each of the speech signals received by the receiving circuitry 210. In the case of selecting speech signals for output to a user that provides speech input for the video game (e.g. player user and/or spectator user with a microphone), the data processing apparatus can be operable to select the subset from an initial set comprising each of the speech signals received by the receiving circuitry 210 but excluding a speech signal associated with that user.

Hence more generally, in embodiments of the disclosure video images for a video game and also associated speech signals for a plurality of users associated with the video game can be received by the receiving circuitry 210. The video game may be a single player video game or multiplayer video game. In some embodiments of the disclosure, the video game may be a multiplayer video game (e.g. online multiplayer video game) and the plurality of users may comprise a plurality of player users. In some embodiments of the disclosure, the video game may be a multiplayer video game and the plurality of users may comprise a plurality of player users and one or more spectator users. In some embodiments of the disclosure, the video game may be a single player video game and the plurality of users may comprise a respective player user and a plurality of spectator users.

In accordance with the techniques to be discussed below, the data processing apparatus 200 can be configured to receive video images and also speech signals for a plurality of users associated with a video game and select a subset of the received speech signals. The subset of speech signals can be selected for output with the video images for the video game. Therefore, rather than potentially outputting a large number of speech signals, the subset can be selected to allow output of a reduced number of speech signals which can potentially yield improvements relating to communication bandwidth usage and communication intelligibility. This is discussed in more detail later.

Figure 3 schematically illustrates an example of a system in which the data processing apparatus 200 is provided at a server side. The data processing apparatus 200 may be implemented using one or more server devices. In the arrangement of Figure 3, the data processing apparatus 200 communicates with the client devices 101-1, 101-2 and 101-3 via the network 100 (which may be any suitable communications network e.g. the Internet). In the example of Figure 3, the client devices are each associated with a different user who may be any of a player user and a spectator user for a video game.

In the arrangement of Figure 3, the data processing apparatus 200 may receive video images for a video game (e.g. a server-based video game executed using one or more game servers or a video game executed locally by a client device) and also receive associated speech signals. Microphones associated with the client devices 101-1, 101-2 and 101-3 may detect speech inputs by the respective users of the client devices 101-1, 101-2 and 101-3. For example, a microphone provided as part of a smartphone device, laptop device or headset device may be used for detecting speech input by a user and generating speech signals. The speech signals may have any suitable encoding and can communicated to the data processing apparatus 200 via the network 100. Speech signals associated with the users of the client devices 101-1, 101-2 and 101-3 can thus be received by the data processing apparatus 200.

In the example of Figure 3, any suitable communication protocol(s) and video coding scheme(s) may be used for communications between the devices. In the case in which video games are at least partially executed locally by client devices, video images be communicated to and received by the data processing apparatus 200 for use according to the techniques to be discussed below.

Whilst Figure 3 shows an example of a system comprising three client devices, the number of client devices is not particularly limited and there may be any suitable number of client devices. Other similar examples are considered. For example, the system could potentially comprise a large number of respective client devices of the order of tens, hundreds or even thousands. For example, some of the client devices may be associated with player users that play the video game and provide speech inputs, some of the client devices may be associated with spectator users that view the video game and provide speech inputs, and some of the client devices may be associated with spectator users that only view video game and do not provide speech inputs (e.g. due to not having a microphone and/or appropriate rights/permissions to provide speech input for the video game).

Hence in the arrangement of Figure 3 the data processing apparatus 200 can receive video images for a video game and also a plurality of speech signals for a plurality of users associated with that video game. The data processing apparatus 200 can select a subset of the speech signals for output to a given user. For example, in a system comprising N client devices for which the data processing apparatus 200 receives speech signals from each of the N client devices, from an initial set (candidate set) of N-1 speech signals that can potentially be output a given client device (with the initial set of N-1 speech signals not including the respective speech signal associated with the user of that given client device), the data processing apparatus 200 can select a subset of speech signals from the initial set of N-1 speech signals such that the selected subset comprises at least one respective speech signal and no more than N-2 speech signals.

Of course, in some examples, the system may comprise N client devices for which the data processing apparatus 200 receives speech signals from only some of the N client devices (i.e. receives M speech signals where M is an integer that is less than N). This may be the case when one or more users spectate a session for a video game without providing speech input (e.g. watch-only users). In this case, from an initial set (candidate set) of M speech signals that can potentially be provided to a given client device associated with a user that only watches the video game, the data processing apparatus 200 can select a subset of speech signals from the initial set of M speech signals such that the selected subset comprises at least one respective speech signal and no more than M-1 speech signals.

More generally, in the arrangement of Figure 3 the data processing apparatus 200 can receive video images for a video game and also a plurality of speech signals for a plurality of users associated with the video game. The data processing apparatus 200 can select a subset of the received speech signals to be output to a given client device, wherein the data processing apparatus 200 can select the subset from an initial set of speech signals not including a speech signal received from that given client device (in the case that the given client device communicates a speech signal for the video game to the apparatus 200). Hence, the video images can be output to any of the client devices, and the data processing apparatus 200 can output the selected subset of the speech signals to the given client device so as to accompany the video images. The subset can thus be selected to allow output of a reduced number of speech signals which can potentially yield improvements relating to communication bandwidth usage and/or communication intelligibility.

In some examples, a first server (e.g. game server) may be responsible for outputting the video images to the client devices, and the data processing apparatus 200 may be responsible for outputting the selected subset of speech signals, via the network 100. Hence, whilst the data processing apparatus 200 receives the video images, the data processing apparatus 200 may potentially use the received video images solely for performing the selection of the subset of speech signals. For example, the data processing apparatus 200 may be provided as part of a server device that allows broadcasting of voice communications for users associated with an online multiplayer video game to other users associated with the online multiplayer video game and, rather than the data processing apparatus simply broadcasting each user's received speech signal for communication to the other users, the data processing apparatus 200 can select a subset of the received speech signals for output with the video images of the video game. Alternatively, in some embodiments of the disclosure, the data processing apparatus 200 may be responsible for outputting both the video images for the video game and also the selected subset of the speech signals.

Of course, whilst Figure 3 illustrates an example in which the data processing apparatus 200 is provided at a server side, in some examples, the data processing apparatus 200 may be provided at a client side. For example, the data processing apparatus 200 may be provided as part of a video game console or other similar processing device associated with a given user. Hence, the receiving circuitry 210 may receive video images (e.g. via the network 100) generated by one or more of a server device and another client device, and may also receive speech signals for the video game. The data processing apparatus 200 can thus select a subset of the received speech signals to be output to the given user. For example, the received speech signals may comprise an initial set of M speech signals that can potentially be output (by an audio output unit of the data processing apparatus 200, such as one or more associated speaker devices) to the given user, and the data processing apparatus 200 can select a subset of speech signals from the initial set of M speech signals such that the selected subset comprises at least one respective speech signal and no more than M-1 speech signals. The subset can thus be selected to allow output of a reduced number of speech signals which can potentially yield improvements relating to communication intelligibility.

Referring again to Figure 2, the analysis circuitry 220 is configured to analyse at least some of the video images received by the receiving circuitry 210 and generate video description data indicative of one or more properties for the video game. The selection circuitry 230 is configured to select a subset of the speech signals, in which the selection circuitry is configured to select the subset by selecting a respective speech signal responsive to whether a comparison for the respective speech signal and the description data satisfies a selection condition.

The video description data is indicative of one or more properties for the video images depicting the gameplay for the video game. For example, the video description data may be indicative of one or more types of object and/or names of one or more objects and/or one or more actions that are visually represented in the video images. A comparison for a respective speech signal and the video description data can be used for deciding whether to select the respective speech signal. The video description data can thus be used as a reference and comparison for a respective speech signal with the video description data can be used to improve a likelihood that a selected speech signal is of relevance for the video images. Hence, the subset of speech signals can be selected to preferentially include one or more speech signals that are of relevance for the video images.

For example, it is a common problem in that one or more disruptive users for a shared virtual space (e.g. game world for an online game) can provide redundant, superfluous and/or even abusive voice communications which are not relevant for the video game. Such communications can potentially mask or at least hinder other communications from other users which may be more pertinent to an on-going video game. Even a small number of disruptive users can be detrimental to a voice chat function for a video game. More generally, simultaneous voice chat from a potentially large number of users can result in a cacophony of sound causing communications from individual users to become unintelligible and it is desirable to select a subset of speech signals that are of relevance for the video game.

For example, the receiving circuitry 210 may receive a set of P respective speech signals (where P may be a value such as 2 or a value of the order of tens, hundreds or even thousands, or any value therebetween). Rather than outputting each of the received speech signals, the selection circuitry 230 is configured to select a subset (a portion) of the set of P respective speech signals. By preforming speech signal selection using the video description data, the above mentioned problems regarding disruptive users and/or simultaneous voice chat from users causing the resulting audio to become incomprehensible can be addressed.

A comparison for a respective speech signal and the video description data may take a number of different forms. The video description data may be indicative of properties for the video game such as one or more object types, object names and/or actions (e.g. character actions) represented in the video images. Alternatively or in addition, the video description data may be indicative of one or more video captions generated for one or more of the video images by a video caption generator. One or more video captions may be generated for describing a content associated with a respective video image. Alternatively or in addition, the video description data may be indicative of an audio description generated for at least some of the video images. An audio description (e.g. in the form of a text-based audio description or audio-based audio description describing events in the video images) for describing visual information included in a sequence of video images (e.g. such as an audio description for video accessibility) may be generated.

In some examples, a comparison for a respective speech signal and the video description data may comprise generating metadata based on the respective speech signal, the metadata being indicative of one or more properties such as one or more object types, object names and/or actions detected in the speech input. For example, analysis of the speech signal (i.e. audio data analysis) may be performed to detect words associated with object types, object names and actions and metadata generated accordingly so that one or more properties detected for the speech signal can be compared with one or more properties indicated by the video description data. For example, audio analysis may be performed to detect spoken words corresponding to object types, object names and/or actions by characters (e.g. humanoid characters). Metadata indicative of a list of object types can thus be generated for a respective speech signal and compared with the video description data. The video description data may be indicative of a list of object types. A selection condition for deciding whether to select the respective speech signal may for example specify a threshold number of matching object types so that a respective speech signal having at least the threshold number of matching object types can be selected. The above discussion refers to object type but may similarly be carried out using a threshold number of matching object names and/or a threshold number of actions.

In some examples, a comparison for a respective speech signal and the video description data may comprise generating text data for the respective speech signal and using the text data for comparison with the video description data. The analysis circuitry 220 and/or selection circuitry 230 may execute a speech-to-text algorithm for obtaining text data for a respective speech signal. A comparison of the text data and the video description data may be used. Hence, in some cases two respective instances of text data may be obtained for a speech signal and the video images, respectively, and comparison for the speech signal may be performed by comparison the two instances of text data. For example, the above mentioned technique regarding matching object type, object name and action in the text data may be used. Alternatively or in addition, one or more machine learning algorithms using keyword matching and/or semantic matching of the text data may be used. This is discussed in more detail later.

In some embodiments of the disclosure, the video description data is indicative of one or more types of object detected in at least some of the video images. The analysis circuitry 220 may be operable to execute any suitable computer vision model for analysing one or more of the video images for detection of one or more types of object. Computer vision techniques may be used to analyse some or all of the video images and classify objects depicted in the video images to generate video description data indicative of one or more types of object. For example, video images for a first person shooter video game may be analysed to detected types of object such as a firearm, bladed article, vehicle, building and so on. It will be appreciated that a broader or narrower object classification scheme may be used for different use cases. For example, for a first person shooter video game, it may be desirable to use an object classification that classifies firearms into a number of narrower respective classes such as handgun, rifle, shotgun, submachine gun and so on. Computer vision techniques for classifying objects in images are generally known and are not discussed in detail.

In some embodiments of the disclosure, the video description data is indicative of a video caption generated for at least one of the video images. The analysis circuitry 220 may be operable to execute a video captioning model for analysing one or more of the video images and generating a one or more video captions. One or more of the captions generated by the video captioning model may comprise respective caption data which may comprises one or more of audio data and text data. The caption data may comprise one or more words for providing a description of the content included in one or more of the video images. In some examples, the video captioning model may be a machine learning model trained to receive an input comprising one or more video images and generate one or more video captions for one or more of the video images.

In some embodiments of the disclosure, the video description data is indicative of an audio description for at least some of the video images. The analysis circuitry 220 may be operable to execute an audio description model for analysing video images and generating an audio description for at least some of the video images. In some examples, the video captioning model may be a machine learning model trained to receive an input comprising one or more video images and generate an audio description for one or more of the video images. The audio description may be generated as one or more of a text-data and/or audio data.

Audio description techniques exist for providing a spoken description of visual information within a displayed content. For users with visual impairment, audio description can be crucial for their understanding of the content. Audio description techniques can generally be used to describe events, actions and other visual properties in a video content, such as a movie or a television show for example, so as to improve usability of pre-recorded content for users with visual impairment and/or cognitive impairment. The analysis circuitry 220 may be operable to execute an audio description model for generating such an audio description for at least some of the video images.

In some embodiments of the disclosure, the selection circuitry 230 is configured to select a respective speech signal responsive to whether a comparison for the respective speech signal and the description data satisfies a selection condition, in which the comparison for the respective speech signal and the description data satisfies the selection condition when the respective speech signal has at least a threshold content relevance for the video images. The selection condition can be set to specify one or more conditions which when at least met for the comparison of a speech signal and the video description data is indicative of the speech signal having at least a threshold content relevance for the video images.

In some embodiments of the disclosure, the selection condition may be set to specify one or more of a threshold number of matching object types, a threshold number of matching object names and/or a threshold number of matching actions. Hence, in response to the speech signal being indicative of a speech input comprising spoken words that include at least a threshold number of matching object types (and/or object names and/or actions) for the video description data, the selection circuitry 230 can be configured to select the speech signal for inclusion in the subset of speech signals to be output. For example, the selection condition may be set to specify a threshold number for one or more object types indicated by the video description data. Using the selection condition, the speech signal may thus be required to include at least a threshold number of matching instances (e.g. matching object types) for the video description data within a certain time period. The certain time period may be set to any suitable value and may for example be set to a value in the range 10 seconds to 5 minutes.

In some embodiments of the disclosure, the selection condition may be set to specify a threshold match score. Hence, in response to a comparison for a respective speech signal and the video description data being indicative of a match score that is greater than or equal to the threshold match score (with higher match scores corresponding to higher degrees of match), the selection circuitry 230 can be configured to select the speech signal for inclusion in the subset of speech signals to be output. The selection circuitry 230 can be configured to perform a comparison for a respective speech signal and the video description data and generate a match score for the comparison. For example, the selection circuitry 230 can be configured to perform at least one of a keyword comparison operation and/or a semantic comparison operation for a respective speech signal and the video description data and generate a match score (e.g. a value between 0 and 1) indicative of a degree of match for the comparison operation. A keyword matching algorithm and/or semantic matching algorithm may be used for this. Hence, a match score can be generated for a respective speech signal and a decision of whether to select the respective speech signal can be made using the match score and a threshold match score.

Figure 4 schematically illustrates a data processing apparatus 400 in accordance with some embodiments of the disclosure in which the analysis circuitry 220 (which has been discussed previously with respect to Figure 2) comprises a video model 221 and a compare model 222. The video model may for example comprise one or more of a computer vision model, a video captioning model and an audio description model, as discussed above, for generating the video description data.

The compare model 222 is operable to perform a comparison for a respective speech signal with the video description data generated by the video model 221. A speech signal and the video description data may be input to the compare model and the compare model may be operable to output a match score for the comparison. The compare model may be a machine learning model trained to receive an input comprising a speech signal (or a processed representation thereof, or text-data generated by a speech-to-text algorithm) and the video description data and output a match score indicative of a degree of match for the speech signal and the video description data. The compare model 222 may comprise one or more natural language processing (NLP) machine learning models for one or more of keyword matching and/or semantic matching.

In some examples, the compare model 222 may comprise a keyword matching model which may use machine learning. The keyword matching model can be operable to extract keywords from one or both of the speech signal and the video description data and output a match score in dependence on a degree of match for the extracted key words. For example, the keyword matching model may be operable to extract one or more keywords from the video description data (e.g. from an audio description generated for the video images) and output a match score in dependence on a degree of match for the extracted key words and a given speech signal. In this way, a set of one or more key words extracted from the video description data may be obtained and compared with each (or at least some) of the received speech signals to obtain respective match scores for each (or at least some) of the received speech signals. Generally, speech signals including a higher number of words matching the extracted key words correlates with a higher match score and speech signals including a lower number of words matching the extracted key words correlates with a lower match score.

In some examples, the compare model 222 may comprise a semantic matching model which may use machine learning. The semantic matching model can be operable to receive an input comprising at least one speech signal and the video description data and output a match score indicative of a degree of match for the at least one speech signal and the video description data. Hence, a speech signal having a higher degree of semantic similarity to the video description data correlates with a higher match score, whereas a speech signal having a lower degree of semantic similarity to the video description data correlates with a lower match score. The semantic matching model can be trained to measure a distance between semantic meanings of pairs of words, phrases and/or sentences associated with speech signals and the video description data. More generally, the semantic matching model can be trained to determine closeness of meanings of two inputs and output a match sore (e.g. a value between 0 and 1).

The above discussion provides various possibilities by which the selection circuitry can be configured to select a respective speech signal in dependence upon a degree of match between spoken words indicated by the respective speech signal and words indicated by the video description data.

Whilst Figure 4 schematically illustrates an arrangement in which the analysis circuitry 220 comprises the video model 221 and the compare model 222, in some embodiments of the disclosure the functionality of the video model 221 and the compare model 222 may be provided by a single respective machine learning model. Hence, in some embodiments of the disclosure the analysis circuitry 220 may comprise a machine learning model operable to receive an input comprising at least some of the video images received by the receiving circuitry 210 and at least some of the speech signals received by the receiving circuitry 210 and to output a respective match score for each of the at least some speech signals, each respective match score being indicative of a degree of match between a respective speech signal and video description data for the video images. Hence,

Whilst Figure 4 schematically illustrates an arrangement in which the analysis circuitry 220 comprises the compare model 222, in some embodiments of the disclosure the compare model 222 may be part of the selection circuitry 230. The analysis circuitry 220 may be operable to analyse video images and generate video description data. The selection circuitry 230 may be operable to receive the video description data and at least some (or all) of the received speech signals and select a subset of the speech signals for output in dependence on comparison for the speech signals and the video description data so that each speech signal of the selected subset satisfies the selection condition.

In some embodiments of the disclosure, the receiving circuitry 210 is configured to receive a plurality of speech signal indicative of speech input for a plurality of users associated with a video game, and the analysis circuitry 220 and/or the selection circuitry 230 is configured to perform a comparison operation for each of the plurality of speech signals and the description data and the selection circuitry 230 is configured to select a subset of the plurality of speech signals that each satisfy the selection condition. In some examples, for each speech signal that satisfies the selection condition, the selection circuitry 230 can be configured to select that speech signal to be included in the subset.

In some embodiments of the disclosure, the selection circuity 230 is configured to select a threshold number of the speech signals to be included in the selected subset of the speech signals. The subset of speech signals may be restricted to no more than a threshold number of speech signals. In some embodiments of the disclosure, the threshold number corresponds to a plurality of speech signals. For example, the threshold number may be set to a value in the range 2-10 or more preferably a value in the range 2-5. Hence, in response to the selection condition being satisfied by a number of respective speech signals that is less than or equal to the threshold number, the selection circuitry 230 can be operable to select each of the respective speech signals for thereby selecting the subset to be output. For example, the threshold number may be set to a value such as 5, and the number of received speech signal satisfying the selection condition may be 5 or less in which case the selected subset includes each of the speech signals satisfying the selection condition.

In some embodiments of the disclosure, the selection circuity 230 is configured to select a threshold number of the speech signals to be included in the selected subset of the speech signals, in which the threshold number corresponds to one speech signal. Hence, the selected subset may consist of a single respective speech signal. Hence, in response to the selection condition being satisfied by more than one respective speech signal, the selection circuitry 230 can be operable to select a respective one of the speech signals for output. In some examples, the selection circuitry 230 may be operable to perform a random selection with respect to a plurality of respective speech signals that satisfy the selection condition so as to randomly select a single speech signal for output.

In some embodiments of the disclosure, the selection circuitry 230 is configured to determine an order of relevance for at least some of the speech signals. At least some of the speech signals can be ordered according to their relevance with respect to the video description data. In this way, at least some of the speech signals can be ordered with respect to each other and a higher ordered (high relevance) speech signal can be preferentially selected over a lower ordered (lower relevance) speech signal. In particular, for cases in which a number of speech signals satisfying the selection condition is greater than the threshold number of the speech signals to be included in the selected subset, such an ordering can be used to preferentially select higher ordered speech signals for inclusion in the subset.

Hence more generally, in some embodiments of the disclosure the selection circuitry 230 is configured to determine an order of relevance for at least some of the speech signals responsive to a comparison for the at least some of the speech signals and the video description data, and select one or more speech signals according to the order of relevance so as to preferentially select a speech signal of higher relevance instead of another speech signal of lower relevance. For example, where the subset of speech signals is restricted to no more than a threshold number X of speech signals (e.g. X =5), then a top X most relevant speech signals can be selected for thereby selecting the subset. For example, in the case where matching scores are obtained for each of the speech signals, the matching scores may be used to order the speech signals from highest relevance to lowest relevance. In some examples, such ordering may only be performed for respective speech signals for which the selection condition is satisfied (e.g. respective speech signals for which matching scores are greater than or equal to the threshold match score). Hence, as a first pass a given number of speech signals that each satisfy the selection condition may be identified, and in response to the given number of speech signals being greater than the threshold number X, as a second pass the given number of speech signals may be ordered based on relevance (e.g. ranking using values of matching scores) so as to define an order in which to select speech signals to be included in the subset.

As mentioned above, in some cases the selected subset may consist of one speech signal. The selection circuitry 230 can thus be configured to select a respective speech signal according to the order of relevance so as to select only a speech signal of highest relevance. Hence, in this case the data processing apparatus 200 may receive a number of speech signals each indicative of speech input for a plurality of users associated with a video game, and data processing apparatus 200 can select a speech signal of highest relevance for output.

Hence in some embodiments of the disclosure, the selection circuitry 230 can be configured to select the subset of speech signals to consist of a speech signal of highest relevance for the video images and the data processing apparatus 200 can output the subset of speech signals to a user (e.g. any of a player user and a spectator user). In this way, a player user can potentially be provided with a speech signal of highest relevance for their current gameplay. Similarly, a spectator user can potentially be provided with a speech signal of highest relevance for the video images for the video game currently being spectated.

Of course, in some cases it may be desirable to ensure that at least a speech signal for a player user for which the video images are generated is output with the video images to one or more other users (e.g. a spectator user or another player user potentially viewing that player's gameplay via picture-in-picture). Hence, in some embodiments of the disclosure for which the player user has an associated speech signal (which may not always be the case), the selection circuitry 230 may be operable to select the speech signal for the player user for the video images by default (i.e. without comparison for that speech signal with the video description data) and also select the subset according to the techniques discussed above. Hence, at least the speech signal for the player user for the video images and the subset can be selected and output by the data processing apparatus 200.

Therefore, in some cases the data processing apparatus 200 can be configured to select and output a first speech signal associated with the player user for the video images and also select and output the subset comprising at least a second speech signal determined as being highest relevance for the video images. Such an output may be provided to a user that is watching gameplay by the player user. In this way, the video images and the subset can be output to one or more users for allowing viewing of the video images with accompanying audio for both the player user and another user providing spoken input of highest relevance for the video images. Of course, the subset may instead include a threshold number X of speech signals as discussed above.

For example, the video game may be an online multiplayer video game having a plurality of player users each providing speech input and each viewing their own respective video image stream for their own view of a game world. The receiving circuitry 210 can receive video images associated with a respective video image stream for a respective player user (player A) and also receive speech signals for each of the player users and select, from the speech signals for each of the player users other than the respective player user, a respective speech signal of highest relevance for the video images associated with the respective video image stream. In this way, the video images associated with the respective video image stream can be output for display to player A and the respective speech signal of highest relevance for the video images can also be output to player A. Optionally, the video images associated with the respective video image stream may also be output for display to one or more other users (e.g. spectator users and/or other player users possibly as a picture-in-picture) and the respective speech signal of highest relevance for the video images can also be output to the one or more other users, and optionally may be accompanied by a respective speech signal associated with the player user for the video images. Of course, whilst the above discussion refers to outputting the video images associated with a respective video image stream and outputting a respective speech signal of highest relevance for the video images, the data processing apparatus 200 may instead output a plurality of the most relevant speech signals (e.g. top X most relevant speech signals) for the video images.

In some embodiments of the disclosure, the selection circuitry 230 is configured to select a first subset of the speech signals to be output for a first period of time and the selection circuitry is configured to select a second subset of the speech signals to be output for a second period of time that is subsequent to the first period of time, the second subset being different to the first subset. Changes in in at least one of the received video images and the received speech signals can cause the selection circuitry to select one or more different speech signals during different parts of the video game. The first subset of the speech signals can be selected for output for the first period of time and the second subset that includes one or more different speech signals can be selected for output for the second period of time, where the first subset is deemed relevant for the video images during the first period of time and the second subset is deemed relevant for the video images during the second period of time.

The received video images may relate to recorded content and may have any suitable playback duration of the order of tens of seconds, minutes or even hours. The recorded content may be downloaded or streamed to the data processing apparatus 200 for analysis. Similarly, the received video images may relate to live content that is live streamed to the data processing apparatus 200 for analysis. For a first time segment (e.g. a given playback duration of recorded content or a temporal portion of a video stream) of the video images a first subset of speech signals may be selected for output, and for a second time segment of the video images a second subset of speech signals may be selected for output. In particular, as the content depicted in the video images changes and/or as the spoken content of the speech signals changes, spoken input by a first user may become less relevant for the video images, and spoken input by a second user may become more relevant for the video images. For example, a given user may initially be commenting on a player's gameplay (e.g. to provide assistance or other suitable commentary) and may subsequently stop commenting on the player's gameplay (for example due to external factors such as distractions in their local environment) or instead provide unrelated comments. In this case, the speech input associated with the given user may be selected for output with the video images for a first period of time and subsequently not selected for a second period of time subsequent to the first period of time.

In some embodiments of the disclosure, the selection circuitry 230 is configured to periodically determine the order of relevance for at least some of the speech signals and periodically select one or more speech signals according to the order of relevance. The selection circuitry 230 may determine a new order of relevance at fixed time intervals. Any suitable time interval may be used. In some examples, a value in the range 5 seconds to 60 seconds may be used for the time interval. Hence, processing for determining the order of relevance and selecting one or more speech signals can be performed periodically so as to periodically select a subset of speech signals that is of relevance for the current video images. Determining the order of relevance may be performed using a comparison for corresponding temporal portions (segments) of the speech signals and the video description data, for which the temporal portions may have a duration in the range of 10 seconds to 100 seconds. Hence, at a given point in time, an order of relevance can be determined based on comparison for a most recent temporal portion of a speech signal and a corresponding temporal portion of the video images (e.g. a 30 second portion of the speech signal preceding the given point in time may be used for comparison with a video description data generated for a corresponding 30 second portion of the video images).

In some embodiments of the disclosure, one or more of the analysis circuitry 220 and the selection circuitry 230 is configured to detect a predetermined change condition with respect to at least one of the video images and one or more of the speech signals in a currently selected subset and determine another order of relevance (i.e. an updated order of relevance) responsive to the detected change. For example, a predetermined change condition associated with the video images such as a scene change may be detected. Alternatively or in addition, a predetermined change condition associated with a speech signal such as a period of silence exceeding a threshold duration may be detected. Therefore, in response to a detection of a predetermined change condition that may alter a relevance for one or more speech signals in the currently selected subset, the selection circuitry 230 can perform processing for determining a new order of relevance from which selection of a new subset can be made.

In some embodiments of the disclosure, the selection circuitry 230 is configured to determine a first order of relevance for at least some of the speech signals for a first given time and determine a second order of relevance for at least some of the speech signals for a second given time subsequent to the first given time, wherein the selection circuitry is configured to determine the second order of relevance in dependence on a comparison for the at least some of the speech signals and the video description data and also a previous relevance ordering for each of the least some of the speech signals in the first order of relevance. Hence, information for a previously determined order of relevance can be used when determining a subsequent order of relevance. Moreover, as well as comparison for a respective speech signal and the video description data, a previous ordering (ranking) for the respective speech signal can be taken into consideration for determining the subsequent order of relevance. Weights may be associated with some or all of the speech signals based on their previous ranking so that higher rankings are associated with larger weights. In this way, a higher ranked speech signal in a previously determined order of relevance can be given a greater weighting than a lower ranked speech signal in the previously determined order of relevance. This can contribute to increasing a likelihood that a speech signal which was previously of higher relevance (and thus has a higher likelihood of being relevant for a subsequent time in the video game) will be selected for the subsequent time in the video game. For example, a speech signal previously ranked as having a highest relevance has an increased likelihood of being relevant at a later time and can thus be given a weighting for increasing likelihood of selection of this speech signal at a later time even when the comparison for the speech signal may indicate a reduction in the degree of relevance.

The above discussion refers to possibilities for determining an order of relevance for at least some of the speech signals received by the receiving circuitry 210. More generally, the selection circuitry 230 can be configured to vary the selected subset of the speech signals to include at least one speech signal determined as being highest relevance for successive time portions of the video images. The order of relevance may be determined periodically and/or responsive to detection of one or more predetermined change conditions for the video images and/or currently selected speech signals. The selected subset which is output can thus be varied as needed for successive time portions of the video images so as to allow at least a most relevant one of the speech signals to be output.

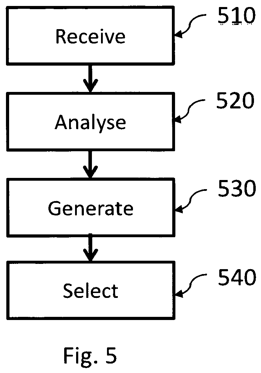

Figure 5 is a schematic flowchart illustrating a computer-implemented method. The method comprises:
receiving (at a step 510) video images and associated speech signals for a video game, the speech signals indicative of speech input for a plurality of users associated with the video game;
analysing (at a step 520) at least some of the video images;
generating (at a step 530) video description data indicative of one or more properties for the video images in dependence on the analysis of at least some of the video images; and
selecting (at a step 540) a subset of the speech signals to be output for the video game, wherein selecting the subset of the speech signals comprises selecting a respective speech signal responsive to whether a comparison for the respective speech signal and the video description data satisfies a selection condition.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A data processing apparatus comprising:
receiving circuitry to receive video images and associated speech signals for a video game, the speech signals indicative of speech input for a plurality of users associated with the video game;
analysis circuitry to analyse at least some of the video images and generate video description data indicative of one or more properties for the video game; and
selection circuitry to select a subset of the speech signals to be output for the video game, wherein the selection circuitry is configured to select a respective speech signal responsive to whether a comparison for the respective speech signal and the video description data satisfies a selection condition.

2. The data processing apparatus according to claim 1, wherein the video description data is indicative of one or more types of object detected in at least some of the video images.

3. The data processing apparatus according to claim 1 or claim 2, wherein the video description data is indicative an audio description for at least some of the video images.

4. The data processing apparatus according to any preceding claim, wherein the selection circuitry is configured to select the respective speech signal responsive to whether the comparison for the respective speech signal and the video description data indicates that the respective speech signal has at least a threshold content relevance for the video images.

5. The data processing apparatus according to any preceding claim, wherein the selection circuitry is configured to select the respective speech signal in dependence upon a degree of match between spoken words indicated by the respective speech signal and words indicated by the video description data.

6. The data processing apparatus according to claim 5, wherein the selection circuitry is configured to select the respective speech signal in dependence on at least one of keyword matching and semantic matching.

7. The data processing apparatus according to any preceding claim, wherein the selection circuity is configured to select a threshold number of the speech signals to be included in the selected subset of the speech signals.

8. The data processing apparatus according to claim 7, wherein the threshold number corresponds to a plurality of speech signals.

9. The data processing apparatus according to claim 7, wherein the threshold number corresponds to one speech signal.

10. The data processing apparatus according to any preceding claim, wherein the selection circuitry is configured to select a first subset of the speech signals to be output for a first period of time and the selection circuitry is configured to select a second subset of the speech signals to be output for a second period of time that is subsequent to the first period of time, the second subset being different to the first subset.

11. The data processing apparatus according to any preceding claim, wherein the selection circuitry is configured to:
determine an order of relevance for at least some of the speech signals responsive to a comparison for the at least some of the speech signals and the video description data; and
select one or more speech signals according to the order of relevance so as to preferentially select a speech signal of higher relevance instead of another speech signal of lower relevance.

12. The data processing apparatus according to claim 11, wherein the selection circuitry is configured to determine a first order of relevance for at least some of the speech signals for a first given time and determine a second order of relevance for at least some of the speech signals for a second given time subsequent to the first given time, wherein the selection circuitry is configured to determine the second order of relevance in dependence on a comparison for the at least some of the speech signals and the video description data and also a previous relevance ordering for each of the least some of the speech signals in the first order of relevance.

13. The data processing apparatus according to claim 11 or claim 12, wherein the selection circuitry is configured to periodically determine the order of relevance for at least some of the speech signals and periodically select one or more speech signals according to the order of relevance.

14. The data processing apparatus according to any one of claims 11 to 13, wherein the selection circuitry is configured to detect a predetermined change condition with respect to at least one of the video images and one or more of the speech signals in a currently selected subset and determine another order of relevance responsive to the detected change.

15. The data processing apparatus according to any preceding claim, wherein, the selection circuitry is configured to vary the selected subset of the speech signals to include at least one speech signal determined as being highest relevance for successive time portions of the video images.

16. The data processing apparatus according to any preceding claim, wherein the video game is a live online multiplayer video game and the speech signal correspond to live speech signals for each of a plurality of users associated with the live online multiplayer video game.

17. A computer-implemented method comprising:
receiving video images and associated speech signals for a video game, the speech signals indicative of speech input for a plurality of users associated with the video game;
analysing at least some of the video images;
generating video description data indicative of one or more properties for the video game in dependence on the analysis of at least some of the video images; and
selecting a subset of the speech signals to be output for the video game, wherein selecting the subset of the speech signals comprises selecting a respective speech signal responsive to whether a comparison for the respective speech signal and the video description data satisfies a selection condition.

18. Computer software which when executed by a computer causes the computer to perform the method according to claim 17.
